Europäisches Patentamt

European Patent Office

Office européen des brevets

(19)

(11) Publication number: **0 455 331 A1**

# EUROPEAN PATENT APPLICATION

(12)

(21) Application number: **91302007.9**

(22) Date of filing: **11.03.91**

(51) Int. Cl.5: **C03B 9/447**, B29C 49/70, B65G 47/91

(30) Priority: **06.04.90 GB 9007854**

(43) Date of publication of application:
**06.11.91 Bulletin 91/45**

(84) Designated Contracting States:
**DE FR GB IT**

(71) Applicant: **EMHART GLASS MACHINERY INC.,**
**The Corporation Trust Company,**
**Corporation Trust Center 1209 Orange Street**
**Wilmington, Delaware 19801(US)**

(72) Inventor: **Vajda, Vladimir**
**Schulstrasse 7**
**C-5415 Nussbaumen(CH)**
Inventor: **Grueninger, William**
**102 Seefeldstrasse**
**CH-8008 Zurich(CH)**

(74) Representative: **Randall, John Walter et al**
**Emhart Patents Department, Lyn House, 39**
**The Parade**
**Oadby, Leicester LE2 5BB(GB)**

(54) **Take out device.**

(57) The tongs (4,6,8) of a take out device are constructed so that the spacing between them is adjustable between that appropriate to the moulds from which formed containers are picked up by the take out device to that appropriate to deposit of the containers on a dead plate for removal to a conveyor.

FIG. 1

This invention is concerned with improvements in take out devices for use with glass ware forming machines.

In a conventional type of glass ware forming machine known as an 'I.S. machine', several identical sections, usually eight to ten, but sometimes as many as 16, are mounted side by side and operate, cyclically but in off set timed relationship, to make glass containers. Each section normally contains more than one mould for the making of such containers; usually two or three but increasingly commonly four: the machines are consequently described as double-, triple- or quadruple-gob machines. In the operation of each section the requisite number of gobs of molten glass are provided to a set of parison moulds, in each of which a parison is formed, and the set of parisons is transferred to a set of blow moulds in which they are blown to the required shape. When the containers have been formed they are removed from the blow moulds by a take out device, which picks up the containers and transfers them, usually to a dead plate on which they are cooled, and from which they are pushed out onto a conveyor.

A typical take out device is shown in GB 1274730. This shows a take out device, for use with a double gob glass ware forming machine, comprising two take out tongs, a support for the take out tongs and mechanism arranged to move the support to carry the tongs between a pick up position in which the tongs may pick up moulded glass articles from the moulds of the machine and a deposit position in which the tongs may deposit the glass articles for example at a cooling station or dead plate.

It will be understood that when such a take out device is in use, the spacing of the take out tongs is determined by the spacing of the moulds, and thus the spacing of the moulds determines the spacing of the moulded articles on the dead plate. Conventional push out mechanisms pushing the moulded articles onto a conveyor from the dead plate may, by appropriate spacing of the pusher fingers, alter the spacing of the moulded articles on the conveyor from that on the dead plate, but the amount by which this can be done is severely restricted by the size and spacing of the containers and the need to position the fingers between the containers; this constraint is greater in a three or four gob machine than with a double gob machine. Also if an attempt is made to make a substantial change to the spacing, one at least of the pusher fingers will necessarily be moving quite fast when it first contacts the appropriate container, thus risking damaging the container.

With increasing use of multi gob machines and efforts to increase the rate of operation of the glass ware forming machines, conveyor speeds also have to increase; it is however desirable to have the conveyor speed as low as possible, partly for economy of operation, but also because with increasing conveyor speeds problems of instability of containers on the conveyor increase. For this reason it is often desirable to obtain a spacing of containers on the conveyor which is less than the spacing of the moulds.

With certain machines, the widths of a section of the machine is in fact greater than the distance necessary to accomodate the containers removed from the section. In these cases it is sometimes desirable to ensure that the containers are placed on the conveyor with a spacing which is more than that between the spacing of the moulds, to ensure that the containers on the conveyor are all equally spaced, thus to provide for uniformity of conditions of the containers on the conveyor and for ease of handling in subsequent operations.

It is one of the objects of the present invention to provide a take out device for use with multi gob glass ware forming machine which enables the spacing of containers on the conveyor to be varied from the spacing of containers in the moulds of the machine.

The present invention provides a take out device for use with a multi gob glass ware forming machine comprising at least two take out tongs, a support for the take out tongs and mechanism arranged to move the tongs between a pick up position in which the tongs may pick up moulded glass articles from moulds of the machine and a deposit position in which the tongs may deposit the glass articles, for example onto a dead plate,

characterized in that

at least one of the take out tongs is movably mounted on the support and moving mechanism is provided to move such movable tong between a spacing from its adjacent tong appropriate to the spacing of the moulds when the tongs are in the pick up position and a different spacing when the tongs are in the deposit position.

In the accompanying drawings

Figure 1 shows a take out device according to the invention in a position in which it has just picked up three containers from their blow moulds

Figure 2 shows the device in a position in which it is about to deposit the containers on a dead plate.

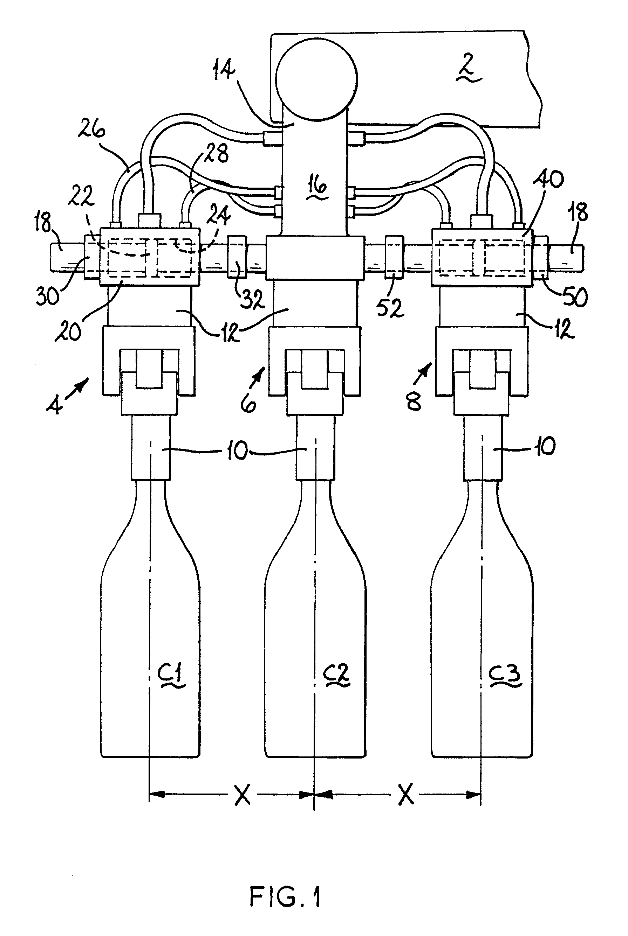

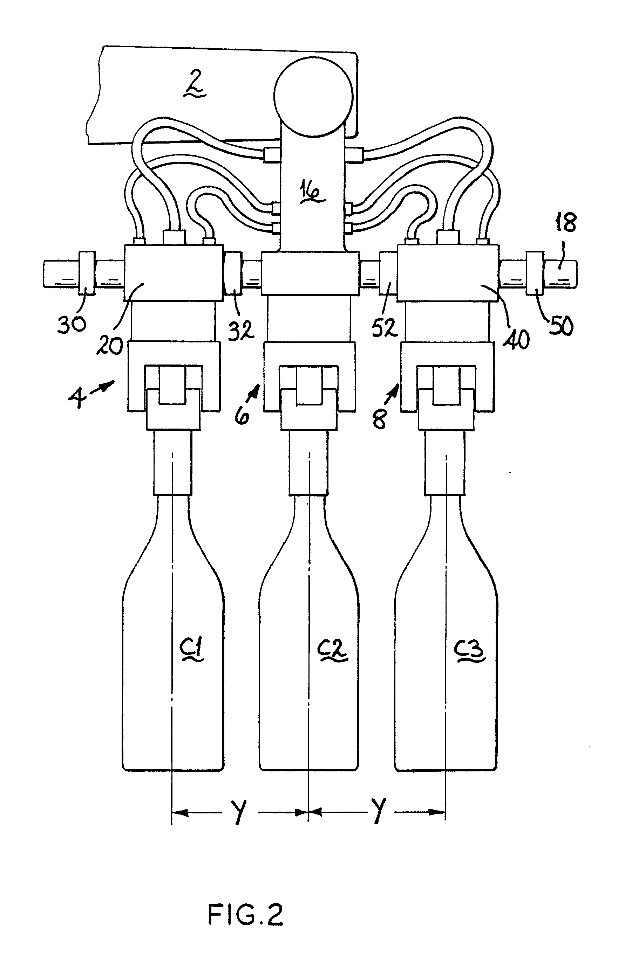

The take out device (Figure 1) is mounted on a transfer arm 2 and is intended for use with a triple gob glassware forming machine. The device comprises three take out tongs, 4,6,8, each comprising opposed tong fingers 10 and pneumatically operated mechanism 12 to cause the tong fingers 10 to open and close to grip a formed container C1, C2, C3, around the neck portion. The take out tongs are mounted on a support 14 which comprises a central column 16, which supports the tong 6, and a transverse rod 18, on which the tongs 4 and 8 are mounted. Mechanism (not shown) is arranged to move the transfer arm 2 to carry the tongs between a pick up position (Figure 1) in which the tongs may pick up moulded containers from moulds of the forming machine and a deposit position (Figure 2) in which the tongs may deposit the containers onto a dead plate (not shown).

The two tongs 4 and 8 are movably mounted on the support 14. The tong 4 comprises a cylinder 20 which is slidably mounted on the rod 18. A piston head 22 is fixed to the rod 18 and is a close fit in a bore 24 of the cylinder 20. Air may be admitted to opposite ends of the bore 24 through supply pipes 26,28: it can be seen in Figure 1 that air admitted through the pipe 26 into the bore 24 forces the cylinder 20 to the left (viewing Figure 1) until the cylinder 20 abuts against an adjustable stop 30 secured to the rod 18. Similarly, when air is admitted to the bore 24 through the pipe 28, and the pipe 26 vented, the cylinder 20 is forced to the right (see Figure 2)until the cylinder 20 abuts against an adjustable stop 32 secured to the rod 18. It will be understood that the tong 8 is similarly constructed, comprising a cylinder 40 corresponding to the cylinder 20, the position of the cylinder 40 being determined by contact with adjustable stops 50,52 on the rod 18.

It will thus be understood that the tongs 4 and 8 are movably mounted on the support 16 and the cylinders 20,40, provide moving mechanism to move the tongs so the spacing between the tongs is X when the tongs are in their pick up position to pick up the containers from the moulds and a narrower spacing Y when the tongs are in the deposit position to deposit the containers on the conveyor. As the take out device returns to the pick up position from the deposit position, the spacing between the tongs is increased from Y to X so that the tongs are correctly positioned to pick up the next set of containers from the moulds.

It will be understood also that the spacing of the tongs at the pick up and deposit positions may be adjusted, within limits, by adjustment of the stops 30, 32, 50, 52 on the rod 18. It will also be understood that a simple modification of the device will enable containers to be deposited on the dead plate with a spacing wider than that of the moulds of the machine

## Claims

1. A take out device for use with a multi gob glass ware forming machine comprising at least two take out tongs (4,6,8), a support (14) for the take out tongs and mechanism arranged to move the tongs between a pick up position in which the tongs may pick up moulded glass articles from moulds of the machine and a deposit position in which the tongs may deposit the glass articles, for example onto a dead plate,
   characterized in that
   at least one of the take out tongs (4,8) is movably mounted on the support (14) and moving mechanism (20,40) is provided to move such movable tong between a spacing from its adjacent tong appropriate to the spacing of the moulds when the tongs are in the pick up position and a different spacing when the tongs are in the deposit position.

2. A take out device according to claim 1 characterized in that it comprises three take out tongs (4,6,8), the outer two (4,8) of which are movably mounted on the support.

3. A take out device according to one of claims 1 and 2 characterized in that the moving mechanism (20,40) comprise a pneumatically operated piston and cylinder device.

4. A take out device according to claim 3 characterized in that the support comprises a horizontal rod (18) on which the piston and cylinder devices of the movable tongs are positioned, and adjustable stops (30,32,50,52) are provided on the rod (18) which determine the positions of the tongs.

5. A take out device according to any one of the preceding claims characterized in that the spacing of the tongs in the deposit position is narrower than that of the tongs at the pick up position.

FIG. 1

4

FIG.2

| | DOCUMENTS CONSIDERED TO BE RELEVANT | | EP 91302007.9 | |
|---|---|---|---|

| Category | Citation of document with indication, where appropriate, of relevant passages | Relevant to claim | CLASSIFICATION OF THE APPLICATION (Int. Cl.5) |
|---|---|---|---|
| X | US - A - 4 241 009<br>(SOKOLOW)<br>* Abstract; column 4, lines 5-47 * | 1-5 | C 03 B 9/447<br>B 29 C 49/70<br>B 65 G 47/91 |
| A | GB - A - 2 134 510<br>(EMHART INDUSTRIES INC.)<br>* Claims; fig. * | 1-5 | |
| A | US - A - 4 710 218<br>(GIBERTI-FORNACIARI)<br>* Column 2, line 17 - column 3, line 4 * | 1-5 | |
| D,A | GB - A - 1 274 730<br>(EMHART CORPORATION) | | |
| | | | TECHNICAL FIELDS SEARCHED (Int. Cl.5) |
| | | | C 03 B<br>B 29 C<br>B 65 G |

The present search report has been drawn up for all claims

| Place of search | Date of completion of the search | Examiner |
|---|---|---|
| VIENNA | 16-07-1991 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document